# EUROPÄISCHE PATENTSCHRIFT

(11) **EP 1 321 042 B1**
(45) Veröffentlichungstag und Bekanntmachung des Hinweises auf die Patenterteilung: **23.01.2008**
(21) Anmeldenummer: 02024780.5
(22) Anmeldetag: 07.11.2002
(51) Int. Cl.: A23B 4/052, A23B 4/03

(54) **Räucheranlage**
Smoking apparatus
Dispositif de fumage

(30) Priorität: 19.12.2001 DE 20120494 U
(43) Veröffentlichungstag der Anmeldung: 25.06.2003
(73) Patentinhaber: NESS & Co. GmbH, 73630 Remshalden (DE)
(72) Erfinder: Ness, Eduard, Dipl. Ing., 73630 Remshalden (DE)
(74) Vertreter: Schmid, Berthold

(56) Entgegenhaltungen:
- EP-A- 0 271 746
- DE-A- 3 514 693
- DE-A- 4 017 969
- GB-A- 2 225 208
- US-A- 2 116 223
- US-A- 3 943 841
- US-A- 4 310 020
- US-A- 5 051 267

## Beschreibung

Die Erfindung bezieht sich auf eine Räucheranlage zum Räuchern und/oder Trocknen von Fisch, Fleisch- und Wurstwaren oder dergleichen. Bekannte Räucheranlagen bestehen aus einer Räucherkammer, welche über ihre Abluft- und Zuluftkanäle sowie ein Hauptgebläse mit einem innen- oder außenliegenden Umluftgebläse zum Räuchern mit einem Raucherzeuger verbunden ist.

Wenn derartige Anlagen im geschlossenen System arbeiten, wird der erzeugte Rauch optimal ausgenutzt und zeichnet sich durch minimale Energieaufnahme, geringe Verschmutzung der Anlage und der Rauchrohre aus, wodurch dann auch kleinere Wassermengen zum Reinigen erforderlich sind.

Jedoch ergibt sich hierbei der Nachteil, dass die Umluft nicht ausreichend entwässert wird. Zum Trocknen der Ware in der Kammer wird bei den bekannten Anlagen mit Frischluftumwälzung gearbeitet. Hierbei ist ein großer Energiebedarf zur Aufheizung der zum Trocknen erforderlichen Frischluft erforderlich.

Die Entfeuchtung der Ware ist sehr stark abhängig von der Eigenfeuchte der Frischluft. In manchen Fällen ist die Frischluft von Geruchsstoffen und von Verunreinigungen behaftet.

Aus der US 3,943,841 sind ein Verfahren und eine Vorrichtung zum Aufbereiten der Luft in einer Räucheranlage oder dergleichen bekannt- Die dort beschriebene Räucheranlage weist eine Räucherkammer auf, deren Abluft mittels eines Ventils in zwei Teilluftströme unterteilt wird. Einer dieser beiden Teilluftströme durchströmt unter anderem ein Kühlaggregat mit einer rotierenden Einrichtung zum Abkühlen des Teilluftstroms. Die beiden Teilluftströme werden anschließend mittels eines weiteren Ventils wieder vereinigt und zu einer Heizeinrichtung geführt. Anschließend erfolgt mittels eines weiteren Ventils eine Aufspaltung in Teilluftströme, von denen einer über einen Raucherzeuger geführt ist. Anschließend werden die beiden Teilluftströme wieder vereinigt und über ein Gebläse und einen Befeuchter zurück zur Räucherkammer geführt. Eine derartige Ausgestaltung einer Räucheranlage ist aufgrund der Vielzahl vorhandener Teilluftströme in fertigungstechnischer Hinsicht kostenintensiv und im Betrieb nur mit einer entsprechend komplexen Steuerungseinrichtung steuerbar.

Die GB 2 225 208 A offenbart eine Räucheranlage, bei der die Abluft einer Räucherkammer über ein Gebläse geführt und anschließend in zwei Teilströme aufgeteilt wird, von denen einer über einen Raucherzeuger geführt ist. Anschließend werden die beiden Teilströme wieder vereinigt und durchströmen gemeinsam ein Kühlaggregat, von dem aus der Luftstrom zurück zu der Räucherkammer geführt ist.

Ausgehend von einem derartigen Stand der Technik liegt der vorliegenden Erfindung die Aufgabe zugrunde, eine in einfacher und fertigungstechnisch kostengünstiger Weise ausgestaltete Räucheranlage anzugeben, die sich darüber hinaus durch eine verbesserte Flexibilität im Betrieb, insbesondere hinsichtlich der verwendeten Teilluftströme auszeichnet.

Diese Aufgabe wird bei einer Räucheranlage der eingangs genannten Art dadurch gelöst, dass über den Raucherzeuger nur ein von dem Bypassluftstrom verschiedener Teilluftstrom verläuft, der dem Bypassluftstrom nach dessen Durchströmen des Kühlaggregats vor Wiedereintreten in die Räucherkammer beimengbar ist.

Zu dem bereits bekannten Circo-Smoke-System R wird ein weiteres Kreisgassystem "Circo dry" zum kontrollierten Trocknen der Ware in den Kammern angeordnet.

Hierbei wird ein Teilstrom der Kammerumluft durch einen Ventilator aus dem Behandlungsraum entnommen und zur Entfeuchtung und zur Kühlung bei Kaltrauchprodukten über einen außenliegenden Kühler und nach einer kontrollierten Behandlung der Kammerumluft wieder zugeführt.

Vorzugsweise ist die Förderleistung des Bypass-Gebläses im Kühlaggregat kleiner als diejenige des Umluftgebläses, wodurch bereits gewährleistet ist, dass über das Kühlaggregat nur der Teilluftstrom geführt wird. Außerdem ergibt sich am Eingang des Kühlaggregates ein Rückstau, welcher sich ebenfalls in Richtung des Raucherzeugers auswirkt. Vorzugsweise ist,das Bypassgebläse zwischen dem Abluftkanal der Räucherkammer und dem Kühlaggregat angeordnet, wobei nach dem Bypassgebläse ein Leitungszweig zum Kühlaggregat und ein Abzweig zum Raucherzeuger geführt ist.

Um eine Sauerstoffaufnahme zu erreichen, kann kurzzeitig eine Verbindung zur Außenluft hergestellt werden, wobei vor dem Einlass des Kühlaggregates eine verschließbare Frischluftöffnung vorgesehen ist. Diese ist dabei zweckmäßigerweise zwischen der Räucherkammer und dem Bypassgebläse angeordnet. Für die abzufließende Flüssigkeit weist das Kühlaggregat einen nachgeschalteten Tropfenabscheider auf.

Die aus dem Kühlaggregat der Räucherkammer zuströmende Luft wird zum Erwärmen zweckmäßigerweise beim Einlassen in die Räucherkammer über ein Heizregister geführt und anschließend einem Umlaufventilator in der Räucherkammer zur gleichmäßigen Verteilung in der Kammer zugeführt.

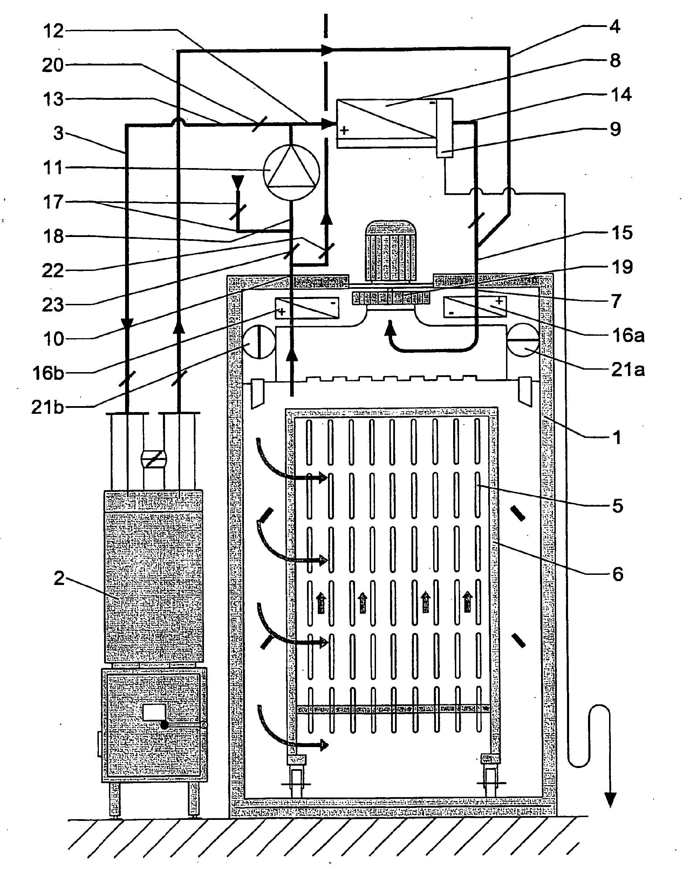

Die Zeichnung zeigt ein Ausführungsbeispiel der Erfindung und zwar eine schematische Darstellung einer Räucheranlage mit geschnittener Räucherkammer.

Die Räucheranlage besteht aus der Räucherkammer 1, welche mit dem Raucherzeuger 2 über einen Abluftkanal 3 und einen Zuluftkanal 4 verbunden ist. In der Räucherkammer 1 befindet sich das Räuchergut 5 auf einem Wagen oder Gestell 6. Am oberen Ende der Räucherkammer 1 ist ein Umluftventilator 19 angeordnet, welcher die bei 7 in die Räucherkammer 1 eintretende Zuluft gleichmäßig verteilt.

Außerhalb der Räucherkammer ist ist ein Kühlaggregat 8 mit einem Wasserabscheider 9 angeordnet. Die Rückluft tritt bei 10 aus der Räucherkammer 1 aus und wird über ein Bypassgebläse 11 zum überwiegenden Teil dem Leitungszweig 12 zugeführt. Durch den Strömungswiderstand im Kühler entsteht ein Stau, welcher mit dazu beiträgt, dass nur ein Teilstrom bei geöffneter Klappe 20 den Raucherzeuger durchströmt.

Die mit Rauch angereicherte Luft wird über das Rohr 4 an der Verbindung 15 mit der gekühlten, entwässerten Luft vom Kühler 8 über Rohr 14 kommende Luft beigemengt.

Nach dem Eintritt des gesamten Zuluftstromes 7 in den Umluftventilator wird dieser je nach Klappenstellung 21a oder 21b über die Heizregister 16a oder 16b geführt um die durch das Kühlaggregat 8 erfolgte Abkühlung wiederum auszugleichen.

Außerdem ist eine Frischluftöffnung 17 eingebaut, welche je nach Bedarf bei 18 über den Kühler in den Behandlungsraum Frischluft zuführt.

Durch gleichzeitiges Öffnen der Klappe 18 und Schließen der Klappe 23 wird die sauerstoffarme Luft aus dem Behandlungsraum abgeführt.

Außerdem ist nach dem Bypassgebläse 11 noch ein Abzweig 13 vorgesehen, welcher in das Kälteaggregat 8 einmündet.

Die gesamte Anlage kann im geschlossenen System gefahren werden, also ohne jede Luftzufuhr von außen, wobei trotzdem eine Entfeuchtung der Luft und damit der Ware 5 durch das Kühlaggregat 8 erfolgt. Die sich im Kühlaggregat abkühlende Luft gibt nämlich die Feuchtigkeit über den Wasserabscheider 9 nach außen ab, wobei dann der durch die Abkühlung erfolgte Temperaturunterschied wiederum durch das Heizregister 16a bzw. 16b oder beide ausgeglichen wird.

## Patentansprüche

1. Räucheranlage zum Räuchern und/oder Trocknen von Fisch, Fleisch- und Wurstwaren oder dergleichen, deren Räucherkammer (1) über ihre Abluft- (10) und Zuluftkanäle (7) sowie über ein Bypassgebläse (11) mit einem außerhalb der Räucherkammer (1) angeordneten Kühlaggregat (8) mit Gebläse verbunden ist, dessen Einlass (12) mit dem Abluftkanal (10) und dessen Auslass (14) mit dem Zuluftkanal (7) der Räucherkammer (1) verbunden ist, wobei die Anlage im geschlossenen System arbeitet und ein Bypassluftstrom unmittelbar zwischen der Räucherkammer (1) und dem Kühlaggregat (8) geführt ist, **dadurch gekennzeichnet, dass** über den Raucherzeuger (2) nur ein von dem Bypassluftstrom verschiedener Teilluftstrom verläuft, der dem Bypassluftstrom nach dessen Durchströmen des Kühlaggregats (8) vor Wiedereintreten in die Räucherkammer (1) beimengbar ist.

2. Räucheranlage nach Anspruch 1, **dadurch gekennzeichnet, dass** die Förderleistung des Gebläses im Kühlaggregat (8) kleiner als diejenige des Bypassgebläses (11) ist.

3. Räucheranlage nach einem oder beiden der vorhergehenden Ansprüche, **dadurch gekennzeichnet, dass** das Bypassgebläse (11) zwischen dem Abluftkanal (10) der Räucherkammer (1) und dem Kühlaggregat (8) angeordnet ist.

4. Räucheranlage nach Anspruch 3, **dadurch gekennzeichnet, dass** nach dem Bypassgebläse (11) ein Leitungszweig (13) zum Raucherzeuger (2) und ein Abzweig (12) zum Kühlaggregat (8) geführt ist.

5. Räucheranlage nach einem oder mehreren der vorhergehenden Ansprüche, **dadurch gekennzeichnet, dass** vor dem Einlass (12) des Bypassgebläses (11) eine verschließbare Frischluftöffnung (17) vorgesehen ist.

6. Räucheranlage nach Anspruch 5, **dadurch gekennzeichnet, dass** die Frischluftöffnung (17) zwischen der Räucherkammer (1) und dem Bypassgebläse (11) angeordnet ist.

7. Räucheranlage nach einem oder mehreren der vorhergehenden Ansprüche, **dadurch gekennzeichnet, dass** das Kühlaggregat (8) einen nachgeschalteten Wasserabscheider (9) aufweist.

8. Räucheranlage nach einem oder mehreren der vorhergehenden Ansprüche, **dadurch gekennzeichnet, dass** der aus dem Kühlaggregat (8) austretende Teilluftstrom beim Eintritt (7) in die Räucherkammer (1) über die Heizregister (16a) oder (16b) oder gleichzeitig über beide geführt wird.

## Claims

1. Smoking installation for smoking and/or drying fish, meat goods and sausage goods, or the like, whose smoking chamber (1) is connected, via the air discharge ducts (10) and air intake ducts (7) and via a bypass ventilator (11), to a cooling unit (8), which is arranged outside the smoking chamber (1) and which has a ventilator, the inlet (12) of which is connected to the air discharge duct (10) and the outlet (14) of which is connected to the air supply duct (7) of the smoking chamber (1), the installation functioning in a closed system and a bypass air stream being guided directly between the smoking chamber (1) and the cooling unit (8), **characterised in that** only a partial air stream which is different from the bypass air stream flows via the smoke production means (2) and can be mixed with the bypass air stream after the bypass air stream has flowed through the cooling unit (8) before it is re-introduced into the smoking chamber (1).

2. Smoking installation according to claim 1, **characterised in that** the conveying capacity of the ventilator in the cooling unit (8) is less than that of the bypass ventilator (11).

3. Smoking installation according to either or both of the preceding claims, **characterised in that** the bypass ventilator (11) is arranged between the air discharge duct (10) of the smoking chamber (1) and the cooling unit (8).

4. Smoking installation according to claim 3, **characterised in that**, downstream of the bypass ventilator (11), a branch line (13) is guided to the smoke production means (2) and a branch (12) is guided to the cooling unit (8).

5. Smoking installation according to one or more of the preceding claims, **characterised in that** a closable fresh air opening (17) is provided upstream of the inlet (12) of the bypass ventilator (11).

6. Smoking installation according to claim 5, **characterised in that** the fresh air opening (17) is arranged between the smoking chamber (1) and the bypass ventilator (11).

7. Smoking installation according to one or more of the preceding claims, **characterised in that** the cooling unit (8) has a downstream water separator (9).

8. Smoking installation according to one or more of the preceding claims, **characterised in that** the partial air stream which is discharged from the cooling unit (8) is guided via the heat registers (16a) or (16b), or simultaneously via both, when it is introduced (7) into the smoking chamber (1).

## Revendications

1. Fumoir pour fumer et/ou sécher du poisson, de la viande et de la charcuterie ou analogue, dont le compartiment de fumage (1) est relié par l'intermédiaire de conduits d'évacuation (10) et d'amenée (7) d'air et par le biais d'un ventilateur à bypass (11) à un groupe de refroidissement (8) doté d'un ventilateur, qui est placé à l'extérieur du compartiment de fumage (1) et dont l'entrée (12) est reliée au conduit d'évacuation d'air (10) et dont la sortie (14) est reliée au conduit d'amenée d'air (7) du compartiment de fumage (1), le fumoir fonctionnant en circuit fermé et un flux d'air dérivé circulant directement entre le compartiment de fumage (1) et le groupe de refroidissement (8), **caractérisé en ce que** seul un flux d'air partiel distinct du flux d'air dérivé passe par le générateur de fumée (2), flux d'air partiel qui peut être mélangé au flux d'air dérivé après que celui-ci a traversé le groupe de refroidissement (8) avant de pénétrer à nouveau dans le compartiment de fumage (1).

2. Fumoir selon la revendication 1, **caractérisé en ce que** le débit du ventilateur dans le groupe de refroidissement (8) est inférieur à celui du ventilateur à bypass (11).

3. Fumoir selon l'une des revendications ou les deux revendications précédentes, **caractérisé en ce que** le ventilateur à bypass (11) est placé entre le conduit d'évacuation d'air (10) du compartiment de fumage (1) et le groupe de refroidissement (8).

4. Fumoir selon la revendication 3, **caractérisé en ce qu'**en aval du ventilateur à bypass (11), une branche (13) mène au foyer (2) et une autre branche (12) au groupe de refroidissement (8).

5. Fumoir selon l'une ou plusieurs des revendications précédentes, **caractérisé en ce qu'**en amont de l'entrée (12) du ventilateur à bypass (11) est prévue une ouverture d'admission d'air frais (17) qui peut être fermée.

6. Fumoir selon la revendication 5, **caractérisé en ce que** l'ouverture d'admission d'air frais (17) est située entre le compartiment de fumage (1) et le ventilateur à bypass (11).

7. Fumoir selon l'une ou plusieurs des revendications précédentes, **caractérisé en ce que** le groupe de refroidissement (8) présente un séparateur d'eau (9) placé en aval.

8. Fumoir selon l'une ou plusieurs des revendications précédentes, **caractérisé en ce que** le flux d'air partiel qui sort du groupe de refroidissement (8) est guidé lors de l'entrée (7) dans le compartiment de fumage (1) à travers l'un (16a) ou l'autre (16b) des registres de chauffage ou simultanément à travers les deux.
